# EUROPEAN PATENT SPECIFICATION

(11) **EP 3 677 646 B1**
(45) Date of publication and mention of the grant of the patent: **18.08.2021**
(21) Application number: 19150183.2
(22) Date of filing: 03.01.2019
(51) Int. Cl.: C08L 71/12, C08L 77/02, C08L 77/06

(54) **THERMOPLASTIC COMPOSITION, METHOD FOR THE MANUFACTURE THEREOF, AND ARTICLES INCLUDING THE THERMOPLASTIC COMPOSITION**
THERMOPLASTISCHE ZUSAMMENSETZUNG, VERFAHREN ZU DEREN HERSTELLUNG UND ARTIKEL MIT DER THERMOPLASTISCHEN ZUSAMMENSETZUNG
COMPOSITION THERMOPLASTIQUE, SON PROCÉDÉ DE FABRICATION ET ARTICLES COMPRENANT LA COMPOSITION THERMOPLASTIQUE

(43) Date of publication of application: 08.07.2020
(73) Proprietor: SHPP Global Technologies B.V., 4612 PX Bergen op Zoom (NL)
(72) Inventor: GUO, Mingcheng, Shanghai 201319 (CN); NA, Ying, Shanghai 201319 (CN)
(74) Representative: Lang, Johannes

(56) References cited:
- US-A- 4 970 272
- US-B1- 8 552 095

## Description

### BACKGROUND

Poly(phenylene ether) (PPE) is a commercially attractive material because of the unique combination of physical, chemical, and electrical properties. The combination of PPE with polyamide (PA) to form compatibilized blends can result in additional desirable properties such as chemical resistance, high strength, and high flow. Examples of such compatibilized blends can be found in U.S. Patent Nos. 4,315,086, 4,659,760, and 4,732,938. The properties of these blends can be further enhanced by the addition of various additives such as impact modifiers, flame retardants, light stabilizers, processing stabilizers, heat stabilizers, antioxidants and fillers. US 8 552 095 B1 relates to a polymer composition comprising the product of melt blending, in specific amounts, polyamide, acid-functionalized poly(phenylene ether), polyimide, and metal dialkylphosphinate. US 4 970 272 A is directed to polyphenylene ether-polyamide compositions having improved resistance to water absorption by incorporating therein a specific phenolic compound.

There remains a continuing need for poly(phenylene ether)/poly(amide) compositions that exhibit improved physical properties. It would be further advantageous to provide a composition with improved hydrothermal stability for use in water contacting applications.

### SUMMARY

A thermoplastic composition comprises 10 to 35 weight percent, preferably 12 to 25 weight percent, more preferably 15 to 21 weight percent of a poly(phenylene ether); 10 to 55 weight percent, preferably 20 to 45 weight percent, more preferably 27 to 40 weight percent of a poly(amide); and 1 to 10 weight percent, preferably 1 to 8 weight percent, more preferably 1 to 5 weight percent of a poly(etherimide); and greater than 20 to 60 weight percent, preferably 25 to 60 weight percent, more preferably 30 to 60 weight percent of a reinforcing fiber; wherein the amount of each component is based on the total weight of the thermoplastic composition.

An article comprises the thermoplastic composition.

A method of making the thermoplastic composition comprises melt-mixing the components of the thermoplastic composition.

The above described and other features are exemplified by the following detailed description.

### DETAILED DESCRIPTION

The present inventors have found that a poly(phenylene ether)/poly(amide) composition can be improved by addition of a particular amount of a poly(etherimide). Addition of a poly(etherimide) can advantageously provide a composition having improved tensile properties as well as improved hydrothermal stability, specifically with regard to an improvement in retaining modulus and stress properties of the composition after hydrothermal aging.

Accordingly, an aspect of the present disclosure is a thermoplastic composition comprising a poly(phenylene ether), a poly(amide), and a poly(etherimide). Poly(phenylene ether)s include those comprising repeating structural units having the formula 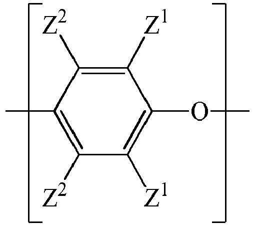 wherein each occurrence of Z¹ is independently halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Z² is independently hydrogen, halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, and combinations thereof.

In some embodiments, the poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

The poly(phenylene ether)-polysiloxane block copolymer can be prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In some embodiments, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure 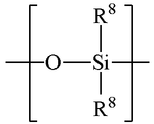 wherein each occurrence of R⁸ is independently hydrogen, C₁₋₁₂ hydrocarbyl or C₁₋₁₂ halohydrocarbyl; and two terminal units having the structure 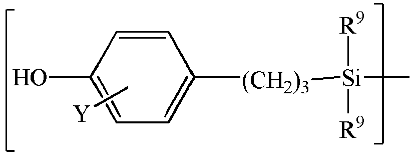 wherein Y is hydrogen, C₁₋₁₂ hydrocarbyl, C₁₋₁₂ hydrocarbyloxy, or halogen, and wherein each occurrence of R⁹ is independently hydrogen, C₁₋₁₂ hydrocarbyl or C₁₋₁₂ halohydrocarbyl. In a very specific embodiment, each occurrence of R⁸ and R⁹ is methyl, and Y is methoxy.

In some embodiments, the monohydric phenol comprises 2,6-dimethylphenol, and the hydroxyaryl-terminated polysiloxane has the structure 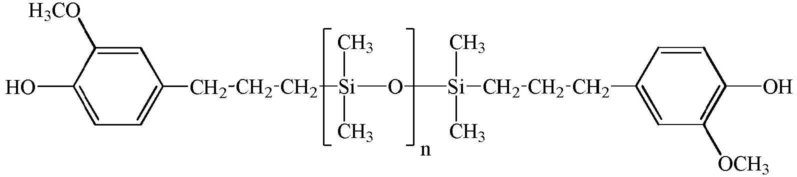 wherein n is, on average, 5 to 100, specifically 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, more specifically 0.35 to 0.5 deciliter per gram, even more specifically 0.4 to 0.5 deciliter per gram.

In some embodiments, the poly(phenylene ether) comprises a homopolymer of 2,6-dimethylphenol. In a specific embodiment, the poly(phenylene ether) comprises a poly(2,6-dimethyl-1,4-phenylene ether) having an intrinsic viscosity if 0.3 to 0.6 deciliters per gram, measured at 25°C in chloroform using an Ubbelohde viscometer.

In some embodiments, the poly(phenylene ether) comprises a poly(phenylene ether)-polysiloxane block copolymer. In these embodiments, the poly(phenylene ether)-polysiloxane block copolymer can, for example, contribute 0.05 to 2 weight percent, specifically 0.1 to 1 weight percent, more specifically 0.2 to 0.8 weight percent, of siloxane groups to the composition as a whole. In a specific embodiment, the poly(phenylene ether) comprises a poly(phenylene ether)-poly(siloxane) block copolymer reaction product comprising a poly(phenylene ether)-poly(siloxane) block copolymer and a second poly(phenylene ether) having an intrinsic viscosity if 0.3 to 0.6 deciliters per gram, measured at 25°C in chloroform using an Ubbelohde viscometer.

The composition comprises the poly(phenylene ether) in an amount of 10 to 35 weight percent, based on the total weight of the composition. Within this range, the poly(phenylene ether) amount can be 12 to 25 weight percent, preferably 15 to 21 weight percent, or 10 to 20 weight percent, or 10 to less than 20 weight percent, or 15 to 19 weight percent.

In addition to the poly(phenylene ether), the thermoplastic composition comprises a poly(amide). Poly(amides), also known as nylons, are characterized by the presence of a plurality of amide (-C(O)NH-) groups and are described in, for example, U.S. Patent No. 4,970,272 to Gallucci. The polyamide can include aliphatic polyamides, aromatic polyamides, semi-aromatic polyamides, polyamide elastomers, and mixtures thereof. In some embodiments, the polyamide comprises an aromatic polyamide. In some embodiments, the polyamide comprises an aliphatic polyamides, specifically, those derived from an aliphatic C₁₋₁₂ alkylene dicarboxylate and an aliphatic C₁₋₁₂ diamine. Specific polyamides include polyamide-6, polyamide-6,6, polyamide-4, polyamide-4,6, polyamide-12, polyamide-6,10, polyamide-6,9, polyamide-6,12, amorphous polyamides, polyamide-6/6T and polyamide-6,6/6T with triamine contents below 0.5 weight percent, polyamide-9T, polyamide-10,10, polyphthalamide, and combinations thereof. In some embodiments, the polyamide comprises a polyamide-6,6 (nylon-66), polyamide-6 (nylon 6), a poly(phthalamide), or a combination thereof. In some embodiments, the polyamide comprises a polyamide-6,6 (nylon-66), polyamide-6 (nylon 6), or a combination thereof

In some embodiments, the poly(amide) can comprise a polyphthalamide. Polyphthalamides comprise repeating units having the formula 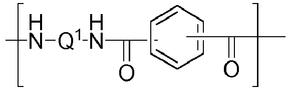 wherein Q¹ is independently at each occurrence a branched or unbranched alicyclic C₄₋₈ alkyl group. In some embodiments, Q¹ is independently at each occurrence a 1,6-hexyl group. Polyphthalamides are the condensation product of terephthalic acid and an amine, isophthalic acid and an amine or a combination of terephthalic acid, isophthalic acid and an amine. When employing more than one diamine the ratio of the diamines can affect some of the physical properties of the resulting polymer such as the melt temperature. When employing more than one acid, the ratio of the acids can affect some of the physical properties of the resulting polymer as well. The ratio of diamine to dicarboxylic acid is typically equimolar although excesses of one or the other can be used to determine the end group functionality. In addition the reaction can further include monoamines and monocarboxylic acids which function as chain stoppers and determine, at least in part, the end group functionality. In some embodiments it is preferable to have an amine end group content of greater than or equal to about 30 milliequivalents per gram (meq/g), or, more specifically, greater than or equal to about 40 meq/g.

In some embodiments the polyphthalamide is a block copolymer or a random copolymer further comprising units of the formula 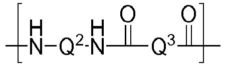 wherein Q² and Q³ are independently at each occurrence a branched or unbranched alicyclic C₄₋₁₂ alkyl group. Q² and Q³ can be the same or different alicyclic C₄₋₁₂ alkyl group.

The polyphthalamide has a glass transition temperature (Tg) greater than or equal to 80°C, or, greater than or equal to 100°C, or, greater than or equal to 120°C. The polyphthalamide also has melting temperature (Tm) of 290 to 330°C. Within this range the Tm can be greater than or equal to 300°C. Also within this range the Tm can be less than or equal to 325°C.

In some embodiments the poly(amide) is not a poly(phthalamide). In some embodiments, poly(amides) other than aliphatic polyamides can be excluded from the composition.

Polyamides are commercially available from a variety of sources. Polyamides can be obtained by a number of well-known processes such as those described in U.S. Patent Nos. 2,071,250, 2,071,251, 2,130,523, and 2,130,948 to Carothers; 2,241,322 and 2,312,966 to Hanford; and 2,512,606 to Bolton et al.

The polyamide can be present in an amount of 10 to 55 weight percent, based on the total weight of the composition. Within this range, the amount of the polyamide can be 20 to 45 weight percent, or 27 to 40 weight percent, or 10 to less than 40 weight percent, or 20 to less than 40 weight percent, or 10 to 38 weight percent, or 20 to 38 weight percent.

In addition to the poly(phenylene ether) and the poly(amide), the thermoplastic composition comprises a poly(etherimide). Poly(etherimides) comprise more than 1, for example 2 to 1000, or 5 to 500, or 10 to 100 structural units of the formula 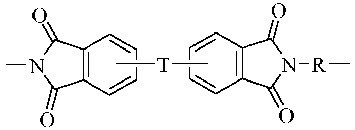 wherein each R is independently the same or different, and is a substituted or unsubstituted divalent organic group, such as a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, in particular a halogenated derivative of any of the foregoing. In some embodiments R is divalent group of one or more of the following formulas 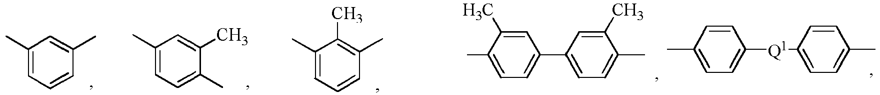 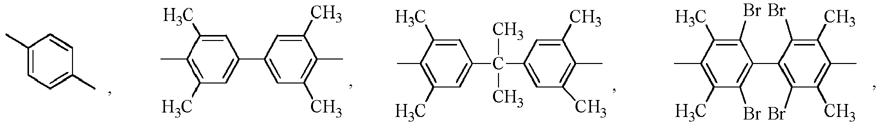 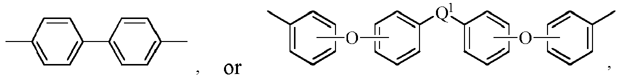 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, at least 10 mole percent or at least 50 mole percent of the R groups contain sulfone groups, and in other embodiments no R groups contain sulfone groups.

Further, T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of the formula 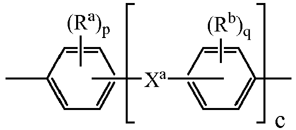 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of the formula 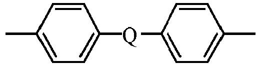 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment, R is m-phenylene, p-phenylene, or a combination thereof, and T is -O-Z-O- wherein Z is a divalent group as described above. Alternatively, R is m-phenylene, p-phenylene, or a combination thereof, and T is -O-Z-O wherein Z is a divalent group as described above where Q is 2,2-isopropylidene. Such materials are available under the trade name ULTEM™ Resin from SABIC. Alternatively, the poly(etherimide) can be a copolymer comprising additional structural poly(etherimide) units wherein at least 50 mole percent (mol%) of the R groups are bis(4,4'-phenylene)sulfone, bis(3,4'-phenylene)sulfone, bis(3,3'-phenylene)sulfone, or a combination thereof and the remaining R groups are p-phenylene, m-phenylene or a combination thereof; and Z is 2,2-(4-phenylene)isopropylidene, i.e., a bisphenol A moiety, an example of which is commercially available under the trade name EXTEM™ Resin from SABIC

In some embodiments, the poly(etherimide) is a copolymer that optionally comprises additional structural imide units that are not polyetherimide units, for example imide units of formula 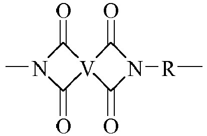 wherein R is as described above and each V is the same or different, and is a substituted or unsubstituted C₆₋₂₀ aromatic hydrocarbon group, for example a tetravalent linker of the formulas 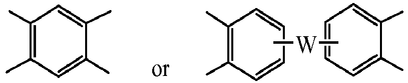 wherein W is a single bond, -O-, -S-, -C(O)-, -SO₂-, -SO-, a C₁₋₁₈ hydrocarbylene group, - P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some embodiments, no additional imide units are present in the poly(etherimide)e.

The poly(etherimide) can be prepared by any of the methods known to those skilled in the art, including the reaction of an aromatic bis(ether anhydride) or a chemical equivalent thereof 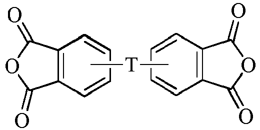 with an organic diamine

H₂N-R-NH₂

wherein T and R are defined as described above. Copolymers of the poly(etherimides) can be manufactured using a combination of an aromatic bis(ether anhydride) and an additional bis(anhydride) that is not a bis(ether anhydride), for example pyromellitic dianhydride or bis(3,4-dicarboxyphenyl) sulfone dianhydride.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. C₁₋₄ alkylated or poly(C₁₋₄)alkylated derivatives of any of the foregoing can be used, for example a polymethylated 1,6-hexanediamine. Combinations of these compounds can also be used. In some embodiments the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination comprising at least one of the foregoing.

The thermoplastic composition can also comprise a poly(etherimide)-polysiloxane copolymer comprising poly(etherimide) units and siloxane blocks of the formula 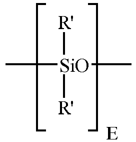 wherein E has an average value of 2 to 100, 2 to 31, 5 to 75, 5 to 60, 5 to 15, or 15 to 40, each R' is independently a C₁₋₁₃ monovalent hydrocarbyl group. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkylene group, C₇₋₁₃ arylalkyleneoxy group, C₇₋₁₃ alkylarylene group, or C₇₋₁₃ alkylaryleneoxy group. The foregoing groups can be fully or partially halogenated with fluorine, chlorine, bromine, or iodine, or a combination comprising at least one of the foregoing. In an embodiment no bromine or chlorine is present, and in another embodiment no halogens are present. Combinations of the foregoing R groups can be used in the same copolymer. In an embodiment, the polysiloxane blocks comprises R' groups that have minimal hydrocarbon content. In a specific embodiment, an R' group with a minimal hydrocarbon content is a methyl group.

The poly(etherimide)-polysiloxane copolymer can be formed by polymerization of an aromatic bis(ether anhydride) and a diamine component comprising an organic diamine as described above or a combination of diamines, and a polysiloxane diamine of the formula 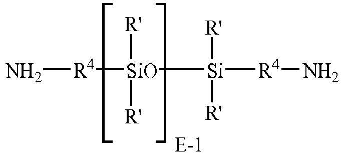 wherein R' and E are as described above, and R⁴ is each independently a C₂-C₂₀ hydrocarbon, in particular a C₂-C₂₀ arylene, alkylene, or arylenealkylene group. In an embodiment R⁴ is a C₂-C₂₀ alkylene group, specifically a C₂-C₁₀ alkylene group such as propylene, and E has an average value of 5 to 100, 5 to 75, 5 to 60, 5 to 15, or 15 to 40. Procedures for making the polysiloxane diamines are well known in the art.

In some poly(etherimide)-polysiloxane copolymers the diamine component can contain 10 to 90 mole percent (mol %), or 20 to 50 mol%, or 25 to 40 mol% of polysiloxane diamine and 10 to 90 mol%, or 50 to 80 mol%, or 60 to 75 mol% of organic diamine, for example as described in US Patent 4,404,350. The diamine components can be physically mixed prior to reaction with the bisanhydride(s), thus forming a substantially random copolymer. Alternatively, block or alternating copolymers can be formed by selective reaction of the polysiloxane diamine and the organic diamine with aromatic bis(ether anhydrides), to make poly(etherimide) blocks that are subsequently reacted together. Thus, the poly(siloxane-etherimide) copolymer can be a block, random, or graft copolymer. In an embodiment the copolymer is a block copolymer.

Examples of specific poly(etherimide)-polysiloxane copolymers are described in US Pat. Nos. 4,404,350, 4,808,686 and 4,690,997. In an embodiment, the poly(etherimide)-polysiloxane copolymer has units of the formula 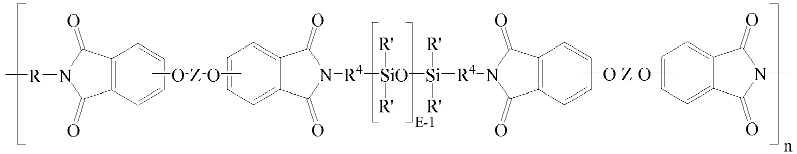 wherein R', E, R, Z, and R⁴ are defined as above, and n is an integer from 5 to 100. In a specific embodiment of the poly(siloxane-etherimide), R of the etherimide is a phenylene, Z is a residue of bisphenol A, R⁴ is n-propylene, E is 2 to 50, 5, to 30, or 10 to 40, n is 5 to 100, and each R' of the siloxane is methyl. Thus, in a specific embodiment, the poly(etherimide) is a poly(etherimide)-polysiloxane block copolymer, preferably comprising a poly(etherimide) block comprising repeating units derived from bisphenol A dianhydride and m-phenylene diamine and a poly(dimethyl siloxane) block.

The relative amount of polysiloxane units and etherimide units in the poly(etherimide)-polysiloxane copolymer depends on the desired properties, and are selected using the guidelines provided herein. In particular, as mentioned above, the block or graft poly(etherimide)-polysiloxane copolymer is selected to have a certain average value of E, and is selected and used in amount effective to provide the desired wt% of polysiloxane units in the composition. In an embodiment the poly(etherimide)-polysiloxane copolymer comprises 10 to 50 wt%, 10 to 40 wt%, or 20 to 35 wt% polysiloxane units, based on the total weight of the poly(siloxane-etherimide).

The poly(etherimide) can have a melt index of 0.1 to 10 grams per minute (g/min), as measured by American Society for Testing Materials (ASTM) D1238 at 340 to 370°C, using a 6.7 kilogram (kg) weight. In some embodiments, the poly(etherimide) has a melt flow rate of 0.1 to 40 grams per 10 minutes, preferably 4 to 25 grams per 10 minutes, determined according to ASTM D1238 at 337°C and under a load of 6.6 kg. In some embodiments, the poly(etherimide) has a weight average molecular weight (Mw) of 1,000 to 150,000 grams/mole (Dalton), as measured by gel permeation chromatography, using polystyrene standards. In some embodiments, the poly(etherimide) has a weight average molecular weight of 10,000 to 150,000 grams per mole, determined by gel permeation chromatography using polystyrene standards. In some embodiments the poly(etherimide) has an Mw of 10,000 to 80,000 Daltons. Such poly(etherimides) typically have an intrinsic viscosity greater than 0.2 deciliters per gram (dl/g), or, more specifically, 0.35 to 0.7 dl/g as measured in m-cresol at 25°C.

The poly(etherimide) can be present in the composition in an amount of 1 to 10 weight percent, based on the total weight of the thermoplastic composition. Within this range, the poly(etherimide) can be present in an amount of 1 to 8 weight percent, or 1 to 5 weight percent, or 1 to less than 5 weight percent.

In addition to the poly(phenylene ether), the poly(amide), and the poly(etherimide), the thermoplastic composition of the present disclosure can optionally further comprise a reinforcing fiber. The fibers can be continuous of chopped fibers. The reinforcing fiber can be an inorganic fiber or an organic fiber. Reinforcing organic fibers can include, for example, poly(ether ketone), polyimide, polybenzoxazole, poly(phenylene sulfide), polyesters, polyethylene, aromatic polyamides, aromatic polyimides, polyetherimides, polytetrafluoroethylene, poly(vinyl alcohol), carbon fibers, and combinations thereof. In some embodiments, the reinforcing fiber comprises an organic fiber comprising carbon fiber, aromatic poly(amide), or a combination thereof. Suitable inorganic reinforcing fibers can include, for example, glass fiber (such as E, A, C, ECR, R, S, D, or NE glasses, or the like), basalt fiber, asbestos, short inorganic fibers such as those derived from blends comprising at least one of aluminum silicates, aluminum oxides, magnesium oxides, and calcium sulfate hemihydrate or the like, or a combination thereof. In some embodiments, the reinforcing fiber comprises glass fiber, in particular, E-glass fiber, S-glass fiber, R-glass fiber, or a combination thereof.

When present, the reinforcing fiber can be included in the composition in an amount of greater than 20 to 60 weight percent, or 22 to 60 weight percent, or 25 to 60 weight percent, or 30 to 60 weight percent, or 40 to 50 weight percent, each based on the total weight of the composition.

The thermoplastic composition can further optionally comprise a processing aid. Processing aids can include, for example, plasticizers, lubricants, or mold release agents. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination thereof, e.g., methyl stearate and polyethylene-polypropylene glycol copolymer in a suitable solvent; waxes such as beeswax, montan wax, paraffin wax, or the like.

When present, the processing aid can be included in the composition in an amount of greater than 0 to 10 weight percent, based on the total weight of the composition.

The thermoplastic composition can further optionally include a thermoplastic polymer different from the poly(phenylene ether), the poly(amide), and the poly(etherimide). Examples of thermoplastic polymers that can be used include polyacetals (e.g., polyoxyethylene and polyoxymethylene), poly(C₁₋₆ alkyl)acrylates, polyacrylamides, polyamideimides, polyanhydrides, polyarylates, polyarylene sulfides (e.g., polyphenylene sulfides), polyarylsulfones, polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polyethylene terephthalates, polybutylene terephthalates, polyarylates, and polyester copolymers such as polyester-ethers), polyetheretherketones, polyetherketoneketones, polyetherketones, polyethersulfones, polyimides (including copolymers such as polyimide-siloxane copolymers), poly(C₁₋₆ alkyl)methacrylates, polymethacrylamides, polynorbornenes (including copolymers containing norbornenyl units) polyolefins (e.g., polyethylenes, polypropylenes, polytetrafluoroethylenes, and their copolymers, for example ethylene-alpha-olefin copolymers), polyoxadiazoles, polyoxymethylene, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers,polyvinylidene fluorides, or the like, or a combination comprising at least one of the foregoing thermoplastic polymers.

When present, the thermoplastic polymer other than the poly(phenylene ether), the poly(amide), and the poly(etherimide) can be included in an amount of greater than 0 to 10 weight percent, based on the total weight of the composition. In some embodiments, no polymers other than the poly(phenylene ether), the poly(amide), and the poly(etherimide) are present in the composition. For example, the thermoplastic composition can exclude a polyalkenyl aromatic (e.g., a polystyrene, including homopolymers and copolymers thereof), a polyolefin, or a polyester.

In some embodiments, the thermoplastic composition can optionally further include an additive composition comprising one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive composition can include an impact modifier, flow modifier, filler (e.g., a particulate polytetrafluoroethylene (PTFE), glass, carbon, mineral, or metal), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styreneacrylonitrile copolymer (TSAN)), or a combination thereof. In some embodiments, the composition can include an additive composition comprising a pigment, a processing aid, a flow promoter, a demolding agent, a thermal stabilizer, a light stabilizer, a UV absorbing additive, a compatibilizer, or a combination thereof. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the composition. In some embodiments, the thermoplastic composition can comprise less than 4 weight percent, or less than 3 weight percent of a flame retardant, in particular of a metal dialkylphosphinate. In some embodiments, a metal dialkylphosphinate can be excluded from the thermoplastic composition of the present disclosure.

The thermoplastic composition of the present disclosure can exhibit one or more of the following properties. The thermoplastic composition can exhibit improved tensile stress, tensile elongation, or both relative to the same thermoplastic composition excluding the poly(etherimide). The thermoplastic composition can exhibit improved hydrothermal aging performance relative to the same thermoplastic composition excluding the poly(etherimide). These advantageous results are further demonstrated in the working examples below.

The composition can be prepared by melt-blending or melt-kneading the components of the composition. The melt-blending or melt-kneading can be performed using common equipment such as ribbon blenders, HENSCHEL™ mixers, BANBURY™ mixers, drum tumblers, single-screw extruders, twin-screw extruders, multi-screw extruders, co-kneaders, and the like. For example, the present composition can be prepared by melt-blending the components in a twin-screw extruder at a temperature of 270 to 310°C, or 280 to 300°C.

The composition described herein can be useful for forming a variety of articles. Suitable methods of forming such articles include single layer and multilayer sheet extrusion, injection molding, blow molding, film extrusion, profile extrusion, pultrusion, compression molding, thermoforming, pressure forming, hydro forming, vacuum forming, and the like. Combinations of the foregoing article fabrication methods can be used. In some embodiments, the article can be a molded article. In view of the advantageous physical properties of the composition described above and in the working examples below, the composition can be particularly well-suited for use in water-contacting articles and water management applications, or other articles having intermittent exposure to water.

This disclosure is further illustrated by the following examples, which are nonlimiting.

### EXAMPLES

Materials used in the following examples are described in Table 1.

**Table 1**

| **Component** | **Description** | **Source** |
|---|---|---|
| PA66 | Nvlon 66, CAS Reg. No. 32131-17-2, obtained as VYDYNE™ 21Z | Ascend |
| PPE-Si | A mixture of poly(2,6-dimethyl-1,4-phenylene ether) (CAS Reg. No. 24938-67-8) and poly(2,6-dimethyl-1,4-phenylene ether)-polydimethylsiloxane block copolymer (CAS Reg. No. 1202019-56-4), the mixture having a polysiloxane content of about 5 weight percent and an intrinsic viscosity of about 0.4 deciliter per gram as measured in chloroform at 25° C.; prepared according to the procedure of U.S. Pat. No. 8,017,697 to Carrillo et al., Example 16 | SABIC |
| PPE 0.30 | Poly(2,6-dimethyl-1,4-phenylene ether), CAS Reg. No. 25134-01-4, having an intrinsic viscosity of 0.30 deciliter per gram as measured in chloroform at 25°C; obtained as NORYL™ PPO 630 | SABIC |
| PPE 0.46 | Poly(2,6-dimethyl-1,4-phenylene ether), CAS Reg. No. 25134-01-4, having an intrinsic viscosity of 0.46 deciliter per gram as measured in chloroform at 25°C; obtained as NORYL™ PPO 646 | SABIC |
| PEI-Si | Poly(etherimide)-polysiloxane block copolymer obtained as SILTEM™ 1700 | SABIC |
| PEI-1 | Polv(etherimide) obtained as ULTEM™ 1000 | SABIC |
| PEI-2 | Polv(etherimide) obtained as ULTEM™ 1010 | SABIC |
| PEI-3 | Polv(etherimide) obtained as ULTEM™ 1040 | SABIC |
| Antioxidant-1 | Octadecyl 3,5-di-tert-butyl-4-hydroxyhydrocinnamate, CAS Reg. No. 2082-79-3; obtained as IRGANOX™ 1076 | Ciba Specialty Chemicals (China) Ltd. |
| Antioxidant-2 | Reaction products of phosphorus trichloride with 1,1'-biphenyl and 2,4-bis(1,1-dimethylethyl)phenol, CAS Reg. No. 119345-01-6; obtained as HOSTANOX™ P-EPQ™ | Clariant |
| Citric acid | Citric acid, CAS Reg. No. 77-92-9 | Jungbunzlauer |
| GF | Chopped glass fibers having a diameter of 10 micrometers, a pre-compounded length of 3.2 millimeters, and a surface treatment for compatibility with polyamide-6 and polyamide-6,6; obtained as CHOPVANTAGE™ 3540 | PPG Industries |

The compositions of the following examples were prepared using a twin screw extruder (Toshiba TEM-37BS, L/D=40.5) with the temperature of the extruder barrel set to 280°C. Pellets from the extruder were then injection molded to provide the various mechanical testing bars needed to evaluate the following properties.

Tensile properties were determined according to ASTM D638.

Flexural properties were determined according to ASTM D790.

Notched Izod Impact (NII) and Unnotched Izod Impact (UNI) properties were determined according to ASTM D256 and ASTM D4812, respectively.

Specific gravity was determined according to ASTM D792.

Heat deflection temperature (HDT) was determined according to ASTM D648 on 6.4 mm thick bars at 1.82 MPa.

To evaluate the mechanical properties after hydrothermal aging, injection molded parts were placed in an oven at 85°C. The parts were immersed in water in the oven. After two weeks at 85°C immersed in water, the parts were removed, and mechanical properties were evaluated.

Compositions and properties are shown in Table 2. Amount of each component of the composition is shown in weight percent, based on the total weight of the composition.

**Table 2**

| **Component** | **Units** | **CE1** | **E1** | **CE2** | **E2** | **CE3** | **E3** | **E4** | **E5** |
|---|---|---|---|---|---|---|---|---|---|
| PA66 | wt% | 36.4 | 33.4 | 36.4 | 33.4 | 36.7 | 33.7 | 33.7 | 33.7 |
| PPE-Si | wt% | | | 3 | 3 | | | | |
| PPE 0.30 | wt% | 18 | 18 | 15 | 15 | | | | |
| PPE 0.46 | wt% | | | | | 18 | 18 | 18 | 18 |
| PEI-Si | wt% | | 3 | | 3 | | | | |
| PEI-1 | wt% | | | | | | 3 | | |
| PEI-2 | wt% | | | | | | | 3 | |
| PEI-3 | wt% | | | | | | | | 3 |
| Antioxidant-1 | wt% | 0.15 | 0.15 | 0.15 | 0.15 | 0.15 | 0.15 | 0.15 | 0.15 |
| Antioxidant-2 | wt% | 0.15 | 0.15 | 0.15 | 0.15 | 0.15 | 0.15 | 0.15 | 0.15 |
| Citric acid | wt% | 0.3 | 0.3 | 0.3 | 0.3 | | | | |
| GF | wt% | 45 | 45 | 45 | 45 | 45 | 45 | 45 | 45 |

| Properties | | | | | | | | | |
|---|---|---|---|---|---|---|---|---|---|
| Modulus of Elasticity | MPa | 13547.6 | 13645 | 13551 | 13893 | 14219 | 14400.4 | 14413 | 14382 |
| Tens. Stress at Break | MPa | 175.1 | 185.4 | 187.9 | 188.2 | 187.8 | 190.5 | 186.6 | 186.1 |
| Elong. at Break | % | 2.28 | 2.57 | 2.38 | 2.5 | 2.42 | 2.55 | 2.52 | 2.56 |
| Flex. Modulus | MPa | 12600 | 12200 | 12400 | 13100 | 12600 | 12900 | 13100 | 13100 |
| Flex. Stress at Yield | MPa | 281 | 279 | 293 | 290 | 289 | 291 | 292 | 289 |
| HDT | (°C) | | | | | 249 | 247 | 247 | 247 |
| Specific Gravity | | 1.518 | 1.517 | 1.509 | 1.529 | 1.521 | 1.527 | 1.527 | 1.526 |

| **Properties - After Hydrothermal aging** | | | | | | | | | |
|---|---|---|---|---|---|---|---|---|---|
| Modulus of Elasticity | MPa | 9146.2 | 9794.4 | 9451.8 | 10105 | 9861.2 | 10475.6 | 10584.8 | 10605 |
| Tens. Stress at Break | MPa | 118.1 | 127.6 | 128.6 | 131.5 | 118.7 | 121 | 121.3 | 118.7 |
| Elong. at Break | % | 3.23 | 2.94 | 3.25 | 2.97 | 3.14 | 2.91 | 3.01 | 3.02 |
| Flex. Modulus | MPa | 8220 | 8530 | 8210 | 9050 | 8700 | 9150 | 9390 | 9220 |
| Flex. Stress at Yield | MPa | 187 | 197 | 199 | 202 | 192 | 190 | 192 | 188 |
| Change in tens. modulus | % | -32.5 | -28.2 | -30.2 | -27.3 | -30.6 | -27.3 | -26.6 | -26.3 |
| Change in tens. stress | % | -32.6 | -31.2 | -31.6 | -30.1 | -36.8 | -36.5 | -35.0 | -36.2 |
| Change in tens. elong. | % | 41.7 | 14.4 | 36.6 | 18.8 | 29.8 | 14.1 | 19.4 | 18.0 |
| Change in flex. modulus | % | -34.8 | -30.1 | -33.8 | -30.9 | -31.0 | -29.1 | -28.3 | -29.6 |
| Change in flex. stress at yield | % | -33.5 | -29.4 | -32.1 | -30.3 | -33.6 | -34.7 | -34.2 | -34.9 |

Table 2 shows that tensile properties (tensile elongation in particular) were improved by addition of PEI or PEI-Si to the PPE/PA compositions. Furthermore, the compositions with added PEI or PEI-Si showed better retention of mechanical properties after two weeks of hydrothermal aging. In particular, modulus, stress and elongation retention were all observed to be improved relative to the comparative examples.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. The term "combination thereof' as used herein includes one or more of the listed elements, and is open, allowing the presence of one or more like elements not named. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A thermoplastic composition comprising,
10 to 35 weight percent, preferably 12 to 25 weight percent, more preferably 15 to 21 weight percent of a poly(phenylene ether);
10 to 55 weight percent, preferably 20 to 45 weight percent, more preferably 27 to 40 weight percent of a poly(amide);
1 to 10 weight percent, preferably 1 to 8 weight percent, more preferably 1 to 5 weight percent of a poly(etherimide); and
greater than 20 to 60 weight percent, preferably 25 to 60 weight percent, more preferably 30 to 60 weight percent of a reinforcing fiber;
wherein the amount of each component is based on the total weight of the thermoplastic composition.

2. The thermoplastic composition of claim 1, wherein the poly(phenylene ether) comprises a poly(2,6-dimethyl-1,4-phenylene ether) having an intrinsic viscosity if 0.3 to 0.6 deciliters per gram, measured at 25°C in chloroform using an Ubbelohde viscometer.

3. The thermoplastic composition of claim 1 or 2, wherein the poly(phenylene ether) comprises a poly(phenylene ether)-poly(siloxane) block copolymer reaction product comprising a poly(phenylene ether)-poly(siloxane) block copolymer and a second poly(phenylene ether) having an intrinsic viscosity if 0.3 to 0.6 deciliters per gram, measured at 25°C in chloroform using an Ubbelohde viscometer.

4. The thermoplastic composition of any one of claims 1 to 3, wherein the poly(amide) comprises nylon-6, nylon-66, a poly(phthalamide), or a combination thereof.

5. The thermoplastic composition of any one of claims 1 to 4, wherein the poly(etherimide) comprises repeating units derived from bisphenol A dianhydride and m-phenylene diamine.

6. The thermoplastic composition of any one of claims 1 to 5, wherein the poly(etherimide) is a poly(etherimide)-polysiloxane block copolymer, preferably comprising a poly(etherimide) block comprising repeating units derived from bisphenol A dianhydride and m-phenylene diamine and a poly(dimethyl siloxane) block.

7. The thermoplastic composition of any one of claims 1 to 6, wherein the poly(etherimide) has one or more of:
a melt flow rate of 0.1 to 40 grams per 10 minutes, preferably 4 to 25 grams per 10 minutes, determined according to ASTM D1238 at 337°C and under a load of 6.6 kg;
a weight average molecular weight of 10,000 to 150,000 grams per mole, determined by gel permeation chromatography using polystyrene standards; and
an intrinsic viscosity of greater than 0.2 deciliters per gram, preferably 0.35 to 0.7 deciliters per gram, determined in m-cresol at 25°C by Ubbelohde viscometer.

8. The thermoplastic composition of any one of claims 1 to 7, wherein the composition further comprises one or more of:
greater than 0 to 10 weight percent of a processing aid; and
greater than 0 to 10 weight percent of a thermoplastic polymer different from the poly(phenylene ether), the poly(amide), and the poly(etherimide);
wherein weight percent of each component is based on the total weight of the composition.

9. The thermoplastic composition of any one of claims 1 to 8, wherein the reinforcing fiber comprises one or both of
an inorganic fiber comprising glass fiber, basalt fiber, or a combination thereof; and
an organic fiber comprising carbon fiber, aromatic poly(amide), or a combination thereof.

10. The thermoplastic composition of any one of claims 1 to 9, wherein the reinforcing fiber comprises glass fiber, preferably wherein the glass fiber is E-glass fiber, S-glass fiber, R-glass fiber, or a combination thereof.

11. The thermoplastic composition of any one of claims 1 to 10, wherein the composition further comprises an additive composition comprising a pigment, a processing aid, a flow promoter, a demolding agent, a thermal stabilizer, a light stabilizer, a UV absorbing additive, a compatibilizer, or a combination thereof.

12. The thermoplastic composition of any one of claims 1 to 11, wherein the thermoplastic composition exhibits one or both of
improved tensile stress, tensile elongation, or both relative to the same thermoplastic composition excluding the poly(etherimide); and
improved hydrothermal aging performance relative to the same thermoplastic composition excluding the poly(etherimide).

13. An article comprising the thermoplastic composition of any one of claims 1 to 12.

14. The article of claim 13, wherein the article is a molded article.

15. A method of making the thermoplastic composition of any one of claims 1 to 12, the method comprising melt-mixing the components of the thermoplastic composition.

## Patentansprüche

1. Thermoplastische Zusammensetzung, umfassend:
10 bis 35 Gewichtsprozent, vorzugsweise 12 bis 25 Gewichtsprozent, bevorzugter 15 bis 21 Gewichtsprozent eines Poly(phenylenethers);
10 bis 55 Gewichtsprozent, vorzugsweise 20 bis 45 Gewichtsprozent, bevorzugter 27 bis 40 Gewichtsprozent eines Poly(amids);
1 bis 10 Gewichtsprozent, vorzugsweise 1 bis 8 Gewichtsprozent, bevorzugter 1 bis 5 Gewichtsprozent eines Poly(etherimids); und
mehr als 20 bis 60 Gewichtsprozent, vorzugsweise 25 bis 60 Gewichtsprozent, bevorzugter 30 bis 60 Gewichtsprozent einer Verstärkungsfaser;
wobei die Menge jeder Komponente auf das Gesamtgewicht der thermoplastischen Zusammensetzung bezogen ist.

2. Thermoplastische Zusammensetzung nach Anspruch 1, wobei der Poly(phenylenether) einen Poly(2,6-dimethyl-1,4-phenylenether) mit einer intrinsischen Viskosität bzw. Grenzviskosität von 0,3 bis 0,6 Dezilitern pro Gramm, gemessen bei 25 °C in Chloroform unter Verwendung eines Ubbelohde-Viskosimeters, umfasst.

3. Thermoplastische Zusammensetzung nach Anspruch 1 oder 2, wobei der Poly(phenylenether) ein Poly(phenylenether)-Poly(siloxan)-Blockcopolymer-Reaktionsprodukt umfasst, das ein Poly(phenylenether)-Poly(siloxan)-Blockcopolymer und einen zweiten Poly(phenylenether) mit einer intrinsischen Viskosität bzw. Grenzviskosität von 0,3 bis 0,6 Dezilitern pro Gramm, gemessen bei 25 °C in Chloroform unter Verwendung eines Ubbelohde-Viskosimeters, umfasst.

4. Thermoplastische Zusammensetzung nach irgendeinem der Ansprüche 1 bis 3, wobei das Poly(amid) Nylon-6, Nylon-66, ein Poly(phthalamid) oder eine Kombination davon umfasst.

5. Thermoplastische Zusammensetzung nach irgendeinem der Ansprüche 1 bis 4, wobei das Poly(etherimid) Wiederholungseinheiten umfasst, die von Bisphenol A-Dianhydrid und m-Phenylendiamin abgeleitet sind.

6. Thermoplastische Zusammensetzung nach irgendeinem der Ansprüche 1 bis 5, wobei das Poly(etherimid) ein Poly(etherimid)-Polysiloxan-Blockcopolymer ist, vorzugsweise umfassend einen Poly(etherimid)-Block, umfassend Wiederholungseinheiten, die von Bisphenol A-Dianhydrid und m-Phenylendiamin abgeleitet sind, und einen Poly(dimethylsiloxan)-Block.

7. Thermoplastische Zusammensetzung nach irgendeinem der Ansprüche 1 bis 6, wobei das Poly(etherimid) eines oder mehrere aufweist von
einer Schmelzflussrate von 0,1 bis 40 Gramm pro 10 Minuten, vorzugsweise 4 bis 25 Gramm pro 10 Minuten, bestimmt gemäß ASTM D1238 bei 337 °C und unter einer Last von 6,6 kg;
einem Gewichtsmittel des Molekulargewichts von 10.000 bis 150.000 Gramm pro Mol, bestimmt durch Gelpermeationschromatographie unter Verwendung von Polystyrolstandards; und
einer intrinsischen Viskosität bzw. Grenzviskosität von mehr als 0,2 Dezilitern pro Gramm, vorzugsweise 0,35 bis 0,7 Dezilitern pro Gramm, bestimmt in m-Cresol bei 25 °C mit einem Ubbelohde-Viskosimeter.

8. Thermoplastische Zusammensetzung nach irgendeinem der Ansprüche 1 bis 7, wobei die Zusammensetzung ferner einen oder mehrere umfasst von
mehr als 0 bis 10 Gewichtsprozent eines Verarbeitungshilfsmittels; und
mehr als 0 bis 10 Gewichtsprozent eines thermoplastischen Polymers, das von dem Poly(phenylenether), dem Poly(amid) und dem Poly(etherimid) verschieden ist;
wobei Gewichtsprozent von jeder Komponente auf das Gesamtgewicht der Zusammensetzung bezogen ist.

9. Thermoplastische Zusammensetzung nach irgendeinem der Ansprüche 1 bis 8, wobei die Verstärkungsfaser eine oder beide von
einer anorganischen Faser, umfassend Glasfaser, Basaltfaser oder eine Kombination davon; und
einer organischen Faser, umfassend Kohlenstofffaser, aromatisches Poly(amid) oder eine Kombination davon, umfasst.

10. Thermoplastische Zusammensetzung nach irgendeinem der Ansprüche 1 bis 9, wobei die Verstärkungsfaser Glasfaser umfasst, vorzugsweise wobei die Glasfaser eine E-Glasfaser, eine S-Glasfaser, eine R-Glasfaser oder eine Kombination davon ist.

11. Thermoplastische Zusammensetzung nach irgendeinem der Ansprüche 1 bis 10, wobei die Zusammensetzung ferner eine Additivzusammensetzung umfasst, die ein Pigment, ein Verarbeitungshilfsmittel, ein Fließhilfsmittel, ein Entformungsmittel, einen Wärmestabilisator, einen Lichtstabilisator, ein UV-absorbierendes Additiv, einen Verträglichkeitsmacher oder eine Kombination davon umfasst.

12. Thermoplastische Zusammensetzung nach irgendeinem der Ansprüche 1 bis 11, wobei die thermoplastische Zusammensetzung eine oder beide von
verbesserter Zugspannung, Zugdehnung oder beiden relativ zu dergleichen thermoplastischen Zusammensetzung ausgenommen des Poly(etherimids); und verbesserter hydrothermaler Alterungsleistung relativ zu dergleichen thermoplastischen Zusammensetzung ausgenommen des Poly(etherimids), zeigt.

13. Gegenstand, umfassend die thermoplastische Zusammensetzung nach irgendeinem der Ansprüche 1 bis 12.

14. Gegenstand nach Anspruch 13, wobei der Gegenstand ein Formgegenstand ist.

15. Verfahren zur Herstellung der thermoplastischen Zusammensetzung nach irgendeinem der Ansprüche 1 bis 12, wobei das Verfahren ein Schmelzmischen der Komponenten der thermoplastischen Zusammensetzung umfasst.

## Revendications

1. Composition thermoplastique comprenant :
10 à 35 % en poids, de préférence 12 à 25 % en poids, plus particulièrement 15 à 21 % en poids d'un poly(phénylène éther) ;
10 à 55 % en poids, de préférence 20 à 45 % en poids, plus particulièrement 27 à 40 % en poids d'un poly(amide) ;
1 à 10 % en poids, de préférence 1 à 8 % en poids, plus particulièrement 1 à 5 % en poids d'un poly(étherimide) ; et
plus de 20 jusqu'à 60 % en poids, de préférence 25 à 60 % en poids, plus particulièrement 30 à 60 % en poids d'une fibre de renfort ;
dans laquelle la quantité de chaque composant est rapportée au poids total de la composition thermoplastique.

2. Composition thermoplastique selon la revendication 1, dans laquelle le poly(phénylène éther) comprend un poly(2,6-diméthyl-1,4-phénylène éther) ayant une viscosité intrinsèque de 0,3 à 0,6 décilitre par gramme, mesurée à 25 °C dans le chloroforme par utilisation d'un viscosimètre Ubbelohde.

3. Composition thermoplastique selon la revendication 1 ou 2, dans laquelle le poly(phénylène éther) comprend un produit de réaction copolymère à blocs poly(phénylène éther)-poly(siloxane) comprenant un copolymère à blocs poly(phénylène éther)-poly(siloxane) et un second poly(phénylène éther) ayant une viscosité intrinsèque de 0,3 à 0,6 décilitre par gramme, mesurée à 25 °C dans le chloroforme par utilisation d'un viscosimètre Ubbelohde.

4. Composition thermoplastique selon l'une des revendications 1 à 3, dans laquelle le poly(amide) comprend le nylon-6, le nylon-66, un poly(phtalamide) ou une combinaison de ceux-ci.

5. Composition thermoplastique selon l'une des revendications 1 à 4, dans laquelle le poly(étherimide) comprend des motifs répétitifs qui dérivent du dianhydride du bisphénol A et de la m-phénylènediamine.

6. Composition thermoplastique selon l'une des revendications 1 à 5, dans laquelle le poly(étherimide) est un copolymère à blocs poly(étherimide)-polysiloxane, comprenant de préférence un bloc poly(étherimide) comprenant des motifs répétitifs qui dérivent du dianhydride du bisphénol A et de la m-phénylènediamine et un bloc poly(diméthylsiloxane).

7. Composition thermoplastique selon l'une des revendications 1 à 6, dans laquelle le poly(étherimide) présente un ou plusieurs parmi :
un indice de fluidité de 0,1 à 40 grammes par 10 minutes, de préférence de 4 à 25 grammes par 10 minutes, déterminé selon ASTM D1238 à 337 °C et sous une charge de 6,6 kg ;
une masse moléculaire moyenne en masse de 10 000 à 150 000 grammes par mole, déterminée par chromatographie par perméation de gel utilisant des étalons polystyrène ; et
une viscosité intrinsèque supérieure à 0,2 décilitre par gramme, de préférence de 0,35 à 0,7 décilitre par gramme, déterminée dans le m-crésol à 25 °C par un viscosimètre Ubbelohde.

8. Composition thermoplastique selon l'une des revendications 1 à 7, dans laquelle la composition comprend en outre un ou plusieurs parmi :
plus de 0 jusqu'à 10 % en poids d'un auxiliaire de mise en œuvre ; et
plus de 0 jusqu'à 10 % en poids d'un polymère thermoplastique différent du poly(phénylène éther), du poly(amide) et du poly(étherimide) ;
dans laquelle le pourcentage en poids de chaque composant est rapporté au poids total de la composition.

9. Composition thermoplastique selon l'une des revendications 1 à 8, dans laquelle la fibre de renfort comprend l'une, ou les deux, parmi
une fibre inorganique comprenant une fibre de verre, une fibre de basalte ou une combinaison de celles-ci ; et
une fibre organique comprenant une fibre de carbone, un poly(amide) aromatique ou une combinaison de ceux-ci.

10. Composition thermoplastique selon l'une des revendications 1 à 9, dans laquelle la fibre de renfort comprend une fibre de verre, de préférence dans laquelle la fibre de verre est une fibre de verre E, une fibre de verre S, une fibre de verre R ou une combinaison de celles-ci.

11. Composition thermoplastique selon l'une des revendications 1 à 10, dans laquelle la composition comprend en outre une composition additive comprenant un pigment, un auxiliaire de mise en œuvre, un promoteur d'écoulement, un agent de démoulage, un stabilisant thermique, un photostabilisant, un additif absorbant UV, un agent de compatibilisation ou une combinaison de ceux-ci.

12. Composition thermoplastique selon l'une des revendications 1 à 11, dans laquelle la composition thermoplastique présente l'une des propriétés suivantes, ou les deux :
une résistance à la traction améliorée, un allongement à la rupture par traction amélioré, ou les deux, par rapport à la même composition thermoplastique ne contenant pas le poly(étherimide) ; et
des performances améliorées de vieillissement hydrothermique, par rapport à la même composition thermoplastique ne contenant pas le poly(étherimide).

13. Article comprenant la composition thermoplastique selon l'une des revendications 1 à 12.

14. Article selon la revendication 13, dans lequel l'article est un article moulé.

15. Procédé de fabrication de la composition thermoplastique selon l'une des revendications 1 à 12, le procédé comprenant le mélange à l'état fondu des composants de la composition thermoplastique.
